# EUROPÄISCHE PATENTSCHRIFT

(11) **EP 0 422 050 B1**
(45) Veröffentlichungstag und Bekanntmachung des Hinweises auf die Patenterteilung: **26.05.1993**
(21) Anmeldenummer: 89907088.2
(22) Anmeldetag: 29.06.1989
(51) Int. Cl.: H01S 3/03

(54) **AERODYNAMISCHES FENSTER FÜR EINEN GASLASER**
AERODYNAMIC WINDOW FOR GAS LASERS
FENETRE AERODYNAMIQUE POUR LASERS A GAZ

(30) Priorität: 29.06.1988 DE 3821836
(43) Veröffentlichungstag der Anmeldung: 17.04.1991
(73) Patentinhaber: FRAUNHOFER-GESELLSCHAFT ZUR FÖRDERUNG DER ANGEWANDTEN FORSCHUNG E.V., 80636 München (DE)
(72) Erfinder: DU, Keming, D-5100 Aachen (DE); FRANEK, Joachim, D-5100 Aachen (DE); LOOSEN, Peter, D-5100 Aachen-Hahn (DE)
(86) Internationale Anmeldenummer: DE8900432
(87) Internationale Veröffentlichungsnummer: WO9000319

(56) Entgegenhaltungen:
- DE-A- 3 510 057
- US-A- 3 851 273

## Beschreibung

Die Erfindung bezieht sich auf ein areodynamisches Fenster eines Gaslasers, dessen aktive Kammer einen fokussierten Laserstrahl abgibt und mittels einer Strahldurchtrittsöffnung mit einer an eine Vakuumpumpe angeschlossenen Fensterkammer strömungsmäßig verbunden ist, die eine Strahlaustrittsöffnung in einen vorzugsweise atmosphärischen Druck aufweisenden Außenraum aufweist.

### Stand der Technik

Laserstrahlung wird aus der aktiven Kammer durch eine Strahldurchtrittsöffnung abgegeben. Diese bildet ein sogenanntes, Fenster, welches bei Gaslasern den Austritt des aktiven Materials, also des Gases, aus der aktiven Kammer verhindern muß. Dieses Fenster besteht üblicherweise aus einem strahlungsdurchlässigen festen Werkstoff. Bei Hochleistungslasern absorbieren die Werkstoffe jedoch soviel Energie, daß sie nicht mehr eingesetzt werden können. Sie werden durch aerodynamische Fenster ersetzt, bei denen bewegtes Gas der Abdichtung dient. Eine solche Strömung wird beispielsweise durch eine Differenzpumpe erzielt. Die Abdichtwirkung dieses aerodynamischen Fensters beruht im wesentlichen darauf, daß eine Fensterkammer vorhanden ist, aus der mit einer Vakuumpumpe abgepumpt wird. Ein solches Fenster mit den eingangs genannten Merkmalen ist aus der DE-OS 35 10 057 bekannt. Die Fensterkammer ist unter einem Winkel zur Achse des Laserstrahls angeordnet und letzterer tritt durch die Strahldurchtrittsöffnung und die Strahlaustrittsöffnung unumgelenkt durch die Fensterkammer hindurch. Dabei sind die beiden genannten Öffnungen in rechtwinkelig zueinander angeordneten Wänden angeordnet, um einen möglichst kurzen Strahlungsweg in den zwischen den Öffnungen gelegenen turbulent durchströmten Bereich zu haben. Diese turbulente Strömung führt zu einer starken Störung der Strahlqualität. Bei dem bekannten aerodynamischen Fenster ist des weiteren von Nachteil, daß die genannten Öffnungen schräg zum Laserstrahl angeordnet sind, so daß ihre Querschnittsfläche zum unbehinderten Durchlassen des Laserstrahls größer sein muß, als wenn sie quer zum Laserstrahl angeordnet wären. Infolgedessen ergibt sich ein erhöhtes Fördervolumen der Pumpe und damit ein erhöhter Energieaufwand sowie eine verstärkte Störung der Strahlqualität.

### Darstellung der Erfindung

Demgegenüber liegt der Erfindung die Aufgabe zugrunde, ein aerodynamisches Fenster der eingangs genannten Art so zu verbessern, daß eine vergleichbare Abdichtungswirkung der Strahldurchtrittsöffnung mit verringerter Pumpenleistung bei verbesserter Strahlqualität erreicht wird.

Diese Aufgabe wird dadurch gelöst, daß der von der aktiven Kammer abgegebene Laserstrahl einen im Bereich der Strahldurchtrittsöffnung gelegenen ersten Fokus hat, und auf einen in der Fensterkammer angeordneten Fokussierspiegel gelenkt ist, von dem der die Fensterkammer verlassende Laserstrahl einen im Bereich der Strahlaustrittsöffnung gelegenen zweiten Fokus erhält.

Für die Erfindung ist von Bedeutung, daß der Laserstrahl im Bereich der beiden Strahlöffnungen jeweils minimal möglichen Querschnitt hat und infolgedessen die beiden Strahlöffnungen hinsichtlich ihres Querschnitts minimiert werden können. Weil die Öffnungsquerschnitte klein sind, erfolgt für bestimmte Druckdifferenzen geringere Gasströmung durch die Strahlöffnungen. Es strömt also weniger Lasergas aus der aktiven Kammer in die Fensterkammer und aus letzterer braucht auch nicht soviel Luft abgepumpt zu werden, weil der Luftzustrom durch die Strahlaustrittsöffnung vergleichsweise gering ist. Im Zusammenhang damit steht, daß weniger Luft in die Laserkammer hineindiffundieren kann, als bei herkömmlichen aerodynamischen Fenstern. Geht man von verringerten Gas- bzw. Luftmengen aus, so kann man annehmen, daß die Strömungsgeschwindigkeiten geringer sind und infolgedessen auch die strömungsbedingten optischen Beeinflussungen des Laserstrahls, der also eine höhere Strahlqualität erhält. Um die Verluste an Lasergas zu minimieren, kann der Druck der Fensterkammer bei einem Wert liegen, der nur wenig kleiner als derjenige in der aktiven Kammer ist.

Bei einer Ausgestaltung der Erfindung sind die Strahldurchtrittsöffnungen und die Strahlaustrittsöffnungen in einem einen spitzen Reflexionswinkel am Fokussierspiegel entsprechenden Abstand dicht nebeneinander angeordnet. Dadurch wird derjenige Bereich, in dem der Laserstrahl durch strömende Gase im Sinne einer Verschlechterung der optischen Qualität beeinflußt wird, auf ein Minimum begrenzt. Zugleich wird durch den spitzen Reflexionswinkel erreicht, daß die Auslenkung des Laserstrahls durch den Fokussierspiegel klein bleibt, so daß auch das Volumen der Fensterkammer klein bleiben kann, der bauliche Aufwand also vergleichsweise gering ist.

Die Fensterkammer hat eine ihren Durchmesser übersteigende Längserstreckung in Richtung des von der aktiven Kammer abgegebenen Laserstrahls und weist den Fokussierspiegel an ihrem der Strahldurchtrittsöffnung gegenüberliegenden Kammerende auf, und die Vakuumpumpe ist in der Nähe der Strahlaustrittsöffnung an die Fensterkammer angeschlossen. Auch mit diesen Merkmalen wird das aerodynamische Fenster verbessert, indem optische Störungen des Laserstrahls bewirkende Gasströmungen im wesentlichen auf einen bestimmten Bereich der Fensterkammer beschränkt werden, während ein anderer, den Fokussierspiegel aufweisender Bereich der Fensterkammer strömungsmäßig gering beeinflußt wird. Die vergleichsweise große Strahllänge innerhalb der Fensterkammer führt infolgedessen nicht zur negativen Beeinflussung der optischen Qualität des Strahls. In diesem Sinne ist die Fensterkammer zylindrisch und die beiden Strahlöffnungen sind in der dem Fokussierspiegel gegenüberliegenden Stirnwand vorhanden.

Die Fensterkammer weist mindestens zwei einander gegenüberliegende und symmetrisch zu den Strahlöffnungen angeordnete Pumpenanschlüsse auf, so daß eine relativ symmetrische Gasströmung erreicht wird, was im Sinne einer geringeren Beeinflussung der Strahlqualität ist.

Um die Störung des Laserstrahls durch Gasströmung gering zu halten, sind die Strahldurchtritts- und/oder die Strahlaustrittsöffnungen düsenförmig. Als Beispiel sei die Laval-Düse genannt. Auch andere strömungsgünstige Gestaltungen der Strahlöffnungen sind geeignet.

In Weiterbildung der Erfindung wird das aerodynamische Fenster zur einfachen Strahlführung so ausgebildet, daß der von der aktiven Kammer abgegebene Laserstrahl seinen ersten Fokus von einem ersten abbildungsfehlerfreien Parabolspiegel erhält, und daß der von dem Fokussierspiegel aus der Fensterkammer abgegebene Laserstrahl von einem zweiten abbildungsfehlerfreien Parabolspiegel rekollimiert ist. Die Anzahl der für das aerodynamische Fenster benötigten Spiegel ist in diesem Fall so gering wie möglich. Trotzdem liefert diese geringe Anzahl optischer Bauteile eine fehlerfreie Strahlabbildung.

Im Sinne der Verringerung der Anzahl von Bauteilen ist der in der Fensterkammer angeordnete Fokussierspiegel ein einziger elliptischer Spiegel.

Die vorgenannten Spiegel sind allerdings nicht sphärisch, d.h. ihre Herstellungskosten sind vielfach höher, als die Herstellungskosten sphärischer Spiegel. Um auch mit sphärischen Spiegeln den Laserstrahl möglichst fehlerfrei abbilden zu können, ist das Fenster so ausgebildet, daß der von der aktiven Kammer abgegebene Laserstrahl seinen ersten Fokus von einem sphärischen Spiegel erhält, das der aus der Fensterkammer abgegebene Laserstrahl von zwei sphärischen, den Fokussierspiegel bildenden Spiegeln den zweiten Fokus erhält, wobei die durch die beiden in der Fensterkammer angeordneten sphärischen Spiegel bestimmte Strahlengangebene senkrecht zu der durch den in der aktiven Kammer angeordneten sphärischen Spiegel bestimmten Strahlengangebene ist.

### Kurze Beschreibung der Zeichnungen

Die Erfindung wird anhand von in der Zeichnung dargestellten Ausführungsbeispielen erläutert. Es zeigt:
- Fig. 1, 2: Querschnittsdarstellungen zweier Ausführungsformen aerodynamischer Fenster,
- Fig. 3: die Anordnung dreier Spiegel zur Strahlführung bei einem erfindungsgemäßen aerodynamischen Fenster,
- Fig. 4: eine Darstellung zur Erläuterung eines Abbildungsfehlers bei sphärischen Spiegeln,
- Fig. 5 bis 7: eine aus sphärischen Spiegeln bestehende Anordnung zur Strahlführung eines aerodynamischen Fensters.

### Bester Weg zur Ausführung der Erfindung

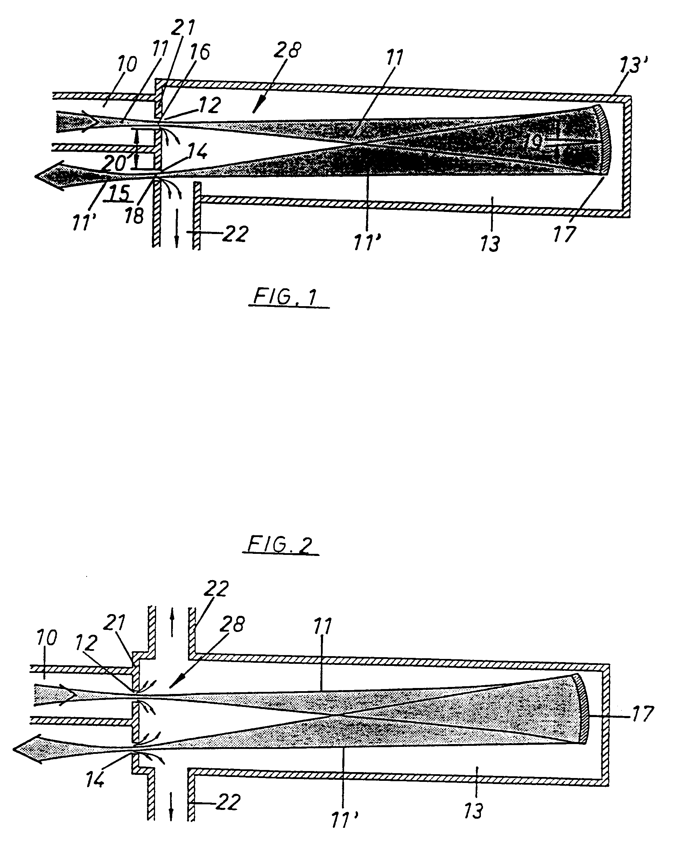

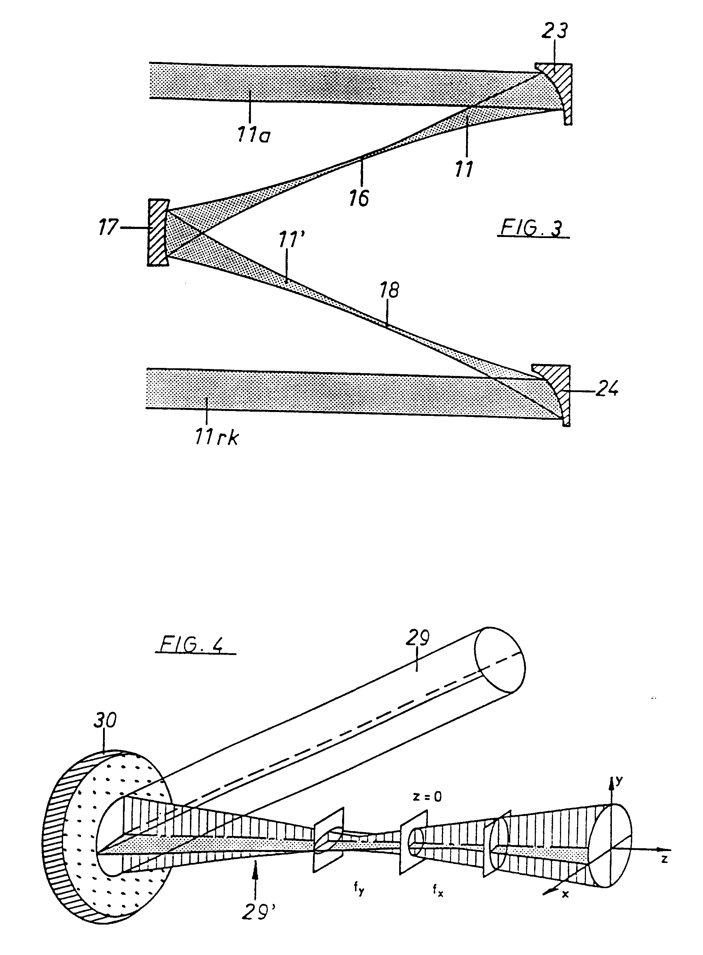

Das aerodynamische Fenster dient einem Gaslaser, dessen aktive Kammer 10 schematisch in den Fig. 1, 2 dargestellt ist. In dieser Kammer 10 befindet sich das Lasergas bei einem niedrigen Druck von z.B. etwas mehr als 100 mbar. Der mit Hilfe des Lasergases erzeugte Laserstrahl 11 verläßt die Kammer 10 durch eine Strahldurchtrittsöffnung 12, die aus einem Loch von z.B. 2 mm Durchmesser besteht. Durch die Strahldurchtrittsöffnung 12 gelangt der Laserstrahl 11 in die Fensterkammer 13, die eine vergleichsweise große Längserstreckung und an ihrem der Öffnung 12 gegenüberliegenden Ende 13' einen Fokussierspiegel 17 aufweist, von dem der Laserstrahl reflektiert wird. Der Fokussierspiegel 17 richtet den Laserstrahl 11' auf eine Strahlaustrittsöffnung 14 der Kammer 13, durch die der Laserstrahl 11' in den Außenraum 15 austritt, der atmosphärischen Druck aufweist. Entsprechend den Fig. 1, 2 ist die Strahlführung so, daß der Laserstrahl 11 im Bereich der Strahldurchtrittsöffnung 12 einen ersten Fokus 16 und im Bereich der Strahlaustrittsöffnung 14 einen zweiten Fokus 18 hat. Die doppelte Fokussierung des Laserstrahls auf die Strahlöffnungen 12 und 14 bewirkt, daß der Laserstrahl im Bereich dieser Öffnungen 12, 14 seinen geringstmöglichen Durchmesser hat und infolgedessen die Öffnungen 13, 14 so klein wie möglich bemessen werden können.

An das aerodynamische Fenster 13 ist eine Vakuumpumpe angeschlossen, deren Pumpenanschluß 22 dargestellt ist. Dieser Pumpenanschluß 22 befindet sich in der Nähe der vorbeschriebenen Öffnungen 12, 14, welche in der Stirnwand 21 der zylindrischen Fensterkammer 13 angeordnet sind. Infolge dieser Anordnung der Öffnungen 12, 14 und des Pumpenanschlusses 22 in deren Nähe ergibt sich bei geeignet hohem Vakuum die durch die an den Öffnungen 12, 14 veranschaulichte Gasströmung aus der Laserkammer 10 einerseits und aus dem Außenraum 15 andererseits in das Innere der Fensterkammer 13 hinein. Das zuströmende Gas wird durch die Vakuumpumpe abgepumpt.

Fig. 2 unterscheidet sich von Fig. 1 im wesentlichen dadurch, daß zwei einander gegenüberliegende Pumpenanschlüsse 22 vorhanden sind. Dadurch erfolgt eine Symmetrierung der Strömung, wie sich aus den eingezeichneten Pfeilen ergibt. Die Gasströmung aus den Öffnungen 12, 14 erfolgt also zu beiden Pumpenanschlüssen 22 hin, so daß eine entsprechende Strömungssymmetrie im Bereich der Öffnungen 13, 14 und kurz danach vorliegt, also in demjenigen Bereich, in dem die Beeinflussung der Qualität des Laserstrahls am größten ist.

Geht man in den Fällen der Fig. 1, 2 davon aus, daß der Druck in der Fensterkammer 13 100 mbar betragen soll und der Durchmesser der Öffnungen 12, 14 2mm ist, so ergibt sich bei einer maximalen Fördermenge von 1,3 g/s ein Fördervolumen von 600l/min. Dieses Volumen besteht zum größten Teil aus Luft, zum geringsten Teil aus dem aus der Laserkammer 10 abströmenden Lasergas, weil der Druckunterschied zwischen den Kammern 10, 13 vergleichsweise gering ist. Die beim Abpumpen auftretende Gasströmung tritt vornehmlich im Bereich 28 der Kammer 13 nahe der Stirnwand 21 auf, während der Fokussierspiegel 17 am gegenüberliegenden Kammerende 13' in einem jeweils wenig durchströmten Bereich liegt. Der Fokussierspiegel 17 ist ein elliptischer Spiegel mit vergleichsweise geringen radialen Erstreckungen. Außerdem ist er in einem sehr kleinen spitzen Reflexionswinkel 19 zum auf ihn auftreffenden Laserstrahl 11 angeordnet, so daß auch der von diesem und dem reflektierten Laserstrahl 11' beanspruchte Raum vergleichsweise gering ist. Die Fensterkammer 13 kann daher klein sein. Sie ist zylindrisch ausgebildet. Die Öffnungen 12, 14 sind in der Stirnwand 21 mit einem dem spitzen Winkel 19 entsprechenden geringen Abstand 20 dicht nebeneinander angeordnet.

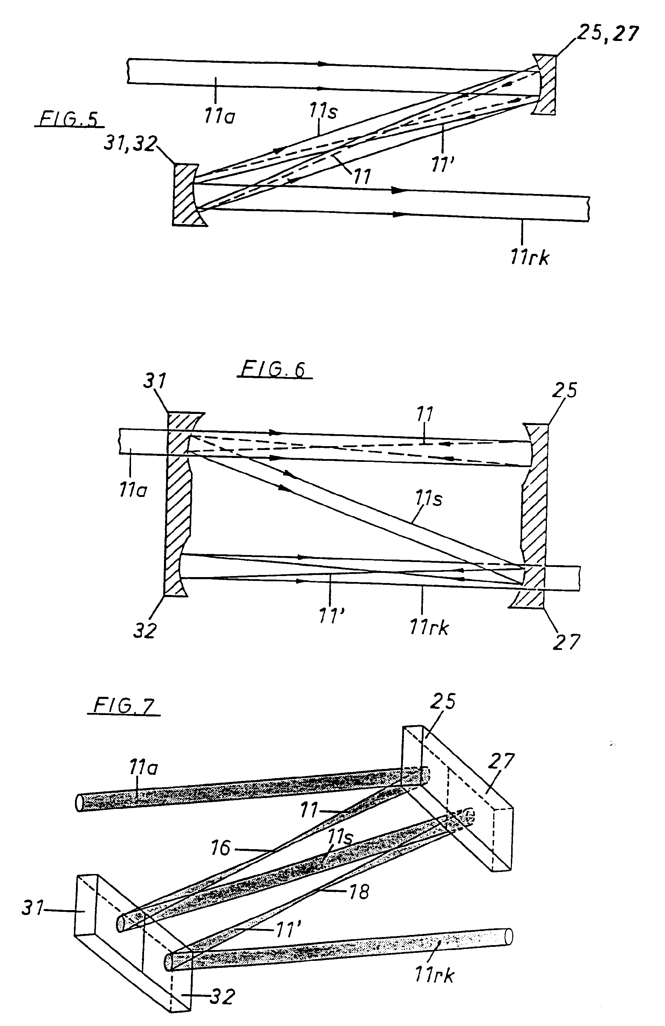

Fig. 3 zeigt den Strahlengang des Laserstrahls im Bereich des aerodynamischen Fensters zwischen den erforderlichen optischen Komponenten. Der vom Laser zur Verfügung gestellte Laserstrahl 11a gelangt auf einen Parabolspiegel 23, mit dem der Laserstrahl 11 abbildungsfehlerfrei einen ersten Fokus 16 erhält. Im Bereich dieses Fokus 16 ist die gemäß Fig. 1, 2 vorgesehene Strahldurchtrittsöffnungen 12 anzuordnen. Der elliptische Spiegel 17 lenkt den Laserstrahl um und gibt ihm im Bereich des Strahls 11' einen zweiten Fokus 18, in dessen Bereich die Strahlaustrittsöffnung 14 vorzusehen ist. Der Laserstrahl 11' trifft dann auf einen Parabolspiegel 24, welcher einen rekollimierten Laserstrahl 11rk abgibt, der zur weiteren Verwendung zur Verfügung steht. Die Parabolspiegel 23, 24 sind abbildungsfehlerfreie, sogenannte Off-Axis-Spiegel. Mit diesen optischen Komponenten kann der Laserstrahl also abbildungsfehlerfrei geführt werden. Die Herstellung dieser optischen Komponenten ist jedoch mit vergleichsweise hohen Kosten behaftet. Es wird daher angestrebt, den Laserstrahl mit sphärischen Spiegeln zu führen. Sphärische Spiegel haben jedoch gemäß Fig. 4 unerwünschte Abbildungsfehler.

Trifft ein Laserstrahl 29 auf einen sphärischen Spiegel 30, so tritt am reflektierten Strahlenbündel Astigmatismus auf. Der Strahl wird in der Einfallebene, hier die YZ-Ebene, stärker fokussiert, als in der XZ-Ebene. Infolgedessen ergeben sich die dargestellten, für die Y- und die X-Koordinate unterschiedlichen Fokusse fy und fx. Bis zum Fokus fy ist der Strahl in Y-Richtung abgeplattet und wird danach in X-Richtung zunehmend abgeflacht. Zwischendurch ergibt sich auch einmal ein kreisförmiger Querschnitt des Strahlenbündels, der jedoch vergleichsweise groß und im Sinne einer Minimierung der Öffnungen 12, 14 nicht zu gebrauchen ist. Ein solcher Strahl 29' mit astigmatischem Fehler kann rekollimiert werden, wenn ein weiterer sphärischer Spiegel verwendet wird, dessen Einfallsebene senkrecht zur Einfallsebene des vorgeschalteten sphärischen Spiegels angeordnet ist. Eine solche Anordnung ist in den Fig. 5 bis 7 dargestellt. In allen Figuren sind Spiegel 25, 27, 31, 32 schematisch in räumlicher Anordnung dargestellt, jedoch ohne räumlichen Bezug zu einer erforderlichen Fensterkammer 13. Es versteht sich, daß deren räumliche Bauteile ebenfalls vorhanden sein müssen, also mit den erforderlichen Öffnungen 12, 14 und mit den Pumpenanschlüssen 22, wobei die Öffnungen 12, 14 im Bereich der Fokusse 16, 18 vorhanden sind.

Der Laserstrahl 11a gelangt auf einen in der aktiven Kammer 10 angeordneten sphärischen Spiegel 25, welcher den Laserstrahl mit dem Fokus 16 versieht. Innerhalb der Fensterkammer 13 ist ein sphärischer Spiegel 31 angeordnet, welcher den Laserstrahl mit einem Strahlengangabschnitt 11s auf einen sphärischen Spiegel 27 reflektiert, der sich ebenfalls in der Fensterkammer befindet und von dem aus der Laserstrahl 11' mit einem Fokus 18 versehenen durch die Strahlaustrittsöffnung 14 auf einem im Außenraum 15 angeordneten weiteren sphärischen Spiegel 32 reflektiert wird, von dem aus der Laserstrahl 11rk zur Bearbeitung verwendet werden kann. Dieser Ausgangsstrahl läuft in der Richtung des Strahls 11a, was im Vergleich zu den Anordnungen der Fig. 1, 2 einer Vereinfachung des Umlenksystems gleichkommt. Fig. 5 zeigt die durch die Spiegel 25, 31 bestimmten Einfalls- bzw. Strahlengangebene. Es ist ersichtlich, daß die durch die Spiegel 27, 32 bestimmte Strahlengangebene senkrecht zu der vorgenannten Einfallsebene angeordnet ist, so daß eine Korrektur des astigmatischen Fehlers erfolgt.

## Patentansprüche

1. Aerodynamisches Fenster eines Gaslasers, dessen aktive Kammer (10) einen fokussierten Laserstrahl (11) abgibt und mittels einer Strahldurchtrittsöffnung (12) mit einer an eine Vakuumpumpe angeschlossenen Fensterkammer (13) strömungsmäßig verbunden ist, die eine Strahlaustrittsöffnung (14) in einen vorzugsweise atmosphärischen Druck aufweisenden Außenraum aufweist, **dadurch gekennzeichnet,** daß der von der aktiven Kammer (10) abgegebene Laserstrahl (11) einen im Bereich der Strahldurchtrittsöffnung (12) gelegenen ersten Fokus (16) hat und auf einen in der Fensterkammer (13) angeordneten Fokussierspiegel (17; 31, 27) gelenkt ist, von dem der die Fensterkammer (13) verlassende Laserstrahl (11') einen im Bereich der Strahlaustrittsöffnung (14) gelegenen zweiten Fokus (18) erhält.

2. Fenster nach Anspruch 1, **dadurch gekennzeichnet,** daß die Strahldurchtrittsöffnung (12) und die Strahlaustrittsöffnung (14) in einem einen spitzen Reflexionswinkel (19) am Fokussierspiegel (17) entsprechenden Abstand (20) dicht nebeneinander angeordnet sind.

3. Fenster nach Anspruch 1 oder 2, **dadurch gekennzeichnet,** daß die Fensterkammer (13) eine ihren Durchmesser übersteigende Längserstreckung in Richtung des von der aktiven Kammer (10) abgegebenen Laserstrahls (11) hat und den Fokussierspiegel (17) an ihren der Strahldurchtrittsöffnung (12) gegenüberliegenden Kammerende (13') aufweist, und daß die Vakuumpumpe in der Nähe der Strahlaustrittsöffnung (14) an die Fensterkammer (13) angeschlossen ist.

4. Fenster nach einem oder mehreren der Ansprüche 1 bis 3, **dadurch gekennzeichnet,** daß die Fensterkammer (13) zylindrisch ist und die beiden Strahlöffnungen (12, 14) in der dem Fokussierspiegel (17) gegenüberliegenden Stirnwand (21) vorhanden sind.

5. Fenster nach Anspruch 1 bis 4, **dadurch gekennzeichnet,** daß die Fensterkammer (13) mindestens zwei einander gegenüberliegende und symmetrisch zu den Strahlöffnungen (12, 14) angeordnete Pumpenanschlüsse (22) aufweist.

6. Fenster nach Anspruch 1 bis 5, **dadurch gekennzeichnet,** daß die Strahldurchtritts- (12) und/oder die Strahlaustritts-Öffnung (14) düsenförmig sind.

7. Fenster nach Anspruch 1 bis 6, **dadurch gekennzeichnet,** daß der von der aktiven Kammer (10) abgegebene Laserstrahl (11) seinen ersten Fokus (16) von einem ersten abbildungsfehlerfreien Parabolspiegel (23) erhält, und daß der von dem Fokussierspiegel (17) aus der Fensterkammer (13) abgegebene Laserstrahl (11') von einem zweiten abbildungsfehlerfreien Parabolspiegel (24) rekollimiert ist.

8. Fenster nach Anspruch 1 bis 7, **dadurch gekennzeichnet,** daß der in der Fensterkammer (13) angeordnete Fokussierspiegel (17) ein einziger elliptischer Spiegel ist.

9. Fenster nach Anspruch 1 bis 7, **dadurch gekennzeichnet,** daß der von der aktiven Kammer (10) abgegebene Laserstrahl (11) seinen ersten Fokus (16) von einem in der aktiven Kammer (10) angeordneten sphärischen Spiegel (25) erhält, daß der aus der Fensterkammer (13) abegegebene Laserstrahl (11') von einem sphärischen, den Fokussierspiegel bildenden Spiegel (27) den zweiten Fokus (18) erhält, wobei die durch den in der Fensterkammer (13) angeordneten sphärischen Spiegel (27) mitbestimmte Strahlengangebene senkrecht zu der durch den in der aktiven Kammer (10) angeordneten sphärischen Spiegel (25) bestimmten Strahlengangebene (Darstellungsebene der Fig. 5) ist.

## Claims

1. Aerodynamic window of a gas laser, whose active chamber (10) emits a focussed laser beam (11) and is flow connected by means of a beam passage opening (12) with a window chamber (13) connected to a vacuum pump and which has a beam exit opening (14) in an outer area which is preferably under atmospheric pressure, characterized in that the laser beam (11) emitted by the active chamber (10) has a first focus (16) in the vicinity of the beam passage opening (12) and is deflected onto a focussing mirror (17,31,27) located in the window chamber (13) and from which the laser beam (11') leaving the window chamber (13) is given a second focus (18) in the vicinity of the beam exit opening (14).

2. Window according to claim 1, characterized in that the beam passage opening (12) and the beam exit opening (14) are closely juxtaposed with a spacing (20) corresponding to an acute reflection angle (19) at the focussing mirror (17).

3. Window according to claims 1 or 2, characterized in that the window chamber (13) has a longitudinal extension in the direction of the laser beam (11) emitted by the active chamber (10) which exceeds its diameter and has the focussing mirror (17) at its end (13') opposite to the beam passage opening (12), and that the vacuum pump is connected to the window chamber (13) in the vicinity of the beam exit opening (14).

4. Window according to one or more of the claims 1 to 3, characterized in that the window chamber (13) is cylindrical and the two beam openings (12,14) are located in the end wall (21) facing the focussing mirror (17).

5. Window according to claims 1 to 4, characterized in that the window chamber (13) has at least two facing pump connections (22) arranged symmetrically to the beam openings (12,14).

6. Window according to claims 1 to 5, characterized in that the beam passage opening (12) and/or the beam exit opening (14) is nozzle-shaped.

7. Window according to claims 1 to 6, characterized in that the laser beam (11) emitted by the active chamber (10) receives its first focus (16) from a first aberration-free parabolic mirror (23) and that the laser beam (11') emitted from the window chamber (11) by the focussing mirror (17) is recollimated by a second aberration-free parabolic mirror (24).

8. Window according to claims 1 to 7, characterized in that the focussing mirror (17) located in the window chamber (13) is a single elliptical mirror.

9. Window according to claims 1 to 7, characterized in that the laser beam (11) emitted by the active chamber (10) receives its first focus (16) from a spherical mirror (25) located in the active chamber (10), that the laser beam (11') emitted by the window chamber (13) receives the second focus (18) from a spherical mirror (27) forming the focussing mirror and the beam path plane also determined by the spherical mirror (27) positioned in the window chamber (13) is at right angles to the beam path plane determined by the spherical mirror (25) located in the active chamber (10) (representation plane of fig. 5).

## Revendications

1. Fenêtre aérodynamique d'un laser à gaz dont la chambre active (10) émet un rayon laser focalisé (11), qui est relié en écoulement, au moyen d'une ouverture de passage du rayon (12), à une chambre à fenêtre (13) raccordée à une pompe à vide, laquelle chambre présente une ouverture de sortie du faisceau (14) dans un espace extérieur de préférence sous pression atmosphérique, **caractérisée en** ce que le rayon laser (11) émis de la chambre active (10) a un premier foyer (16), qui se trouve dans la zone de l'ouverture de passage du rayon (12), et est dirigé sur un miroir de focalisation (17; 31, 27) disposé dans la chambre à fenêtre (13), par lequel miroir (17; 31, 27) le rayon laser (11') sortant de la chambre à fenêtre (13) obtient un deuxième foyer (18) qui se trouve dans la zone de l'ouverture de sortie du faisceau (14).

2. Fenêtre selon la revendication 1, **caractérisée** en ce que l'ouverture de passage du rayon (12) et l'ouverture de sortie (14) du faisceau sont disposées tout près l'une à côté de l'autre à une distance (20) correspondante à un angle de réflexion aigu au miroir de focalisation (17).

3. Fenêtre selon la revendication 1 ou 2, **caractérisée** en ce qu'en sens longitudinal la chambre à fenêtre (13) s'étend sur une distance plus grande que son aire et en direction du faisceau laser (11) émis de la chambre active (10), pendant qu'elle est pourvue du miroir de focalisation (17) à son extrémité de chambre (13') opposée à l'ouverture de passage du rayon (12), et en ce que la pompe à vide est raccordée à la chambre à fenêtre (13) près de l'ouverture de sortie du faisceau (14).

4. Fenêtre selon l'une quelconque des revendications 1 à 3, **caractérisée** en ce que la chambre à fenêtre (13) est cylindrique et que les deux ouvertures de rayon (12, 14) sont prévues dans la paroi frontale (21) opposée audit miroir de focalisation (17).

5. Fenêtre selon les revendications 1 à 4, **caractérisée** en ce que la chambre à fenêtre (13) est prévue d'au moins deux raccords de pompe (22) opposés en arrangement symétrique aux ouvertures de rayon (12, 14).

6. Fenêtre selon les revendications 1 à 5, **caractérisée** en ce que les ouvertures de passage du rayon (12) et/ou de sortie du faisceau (14) présentent la forme de tuyère.

7. Fenêtre selon les revendications 1 et 6, **caractérisée** en ce qu'au rayon laser (11) émis de la chambre active (10) est donné son premier foyer (16), par un premier réflecteur parabolique (23) sans aberration, et en ce que le rayon laser (11') émis de la chambre à fenêtre (13) au moyen d'un miroir de focalisation (17), est recollimé par un deuxième réflecteur parabolique (24) sans aberration.

8. Fenêtre selon les revendications 1 à 7, **caractérisée** en ce que ledit réflecteur de focalisation (17) disposé dans la chambre à fenêtre (13) est un seul miroir elliptique.

9. Fenêtre selon les revendications 1 à 7, **caractérisée** en ce qu'audit rayon laser (11) émis de la chambre active (10) est donné son premier foyer (16) par un réflecteur sphérique (25) disposé dans ladite chambre active (10), en ce qu'au rayon laser (11') émis de la chambre à fenêtre (13) est donné le deuxième foyer (18) au moyen d'un miroir sphérique (27) qui constitue le réflecteur de focalisation, le plan de la marche de rayon, qui est défini, entre autres, par le réflecteur sphérique (27) disposé dans la chambre à fenêtre (13), étant orthogonal, au plan de la marche de rayon (plan du dessin sur la fig. 5) défini par ledit réflecteur sphérique (25) disposé dans la chambre active (10).
